(19) Europäisches Patentamt
European Patent Office
Office européen des brevets

(11) EP 3 950 866 A1

(12) EUROPEAN PATENT APPLICATION
published in accordance with Art. 153(4) EPC

(43) Date of publication:
**09.02.2022 Bulletin 2022/06**

(21) Application number: **20814496.4**

(22) Date of filing: **28.05.2020**

(51) International Patent Classification (IPC):
***C09J 4/00*** *(2006.01)* ***C09J 4/02*** *(2006.01)*
***C09J 11/06*** *(2006.01)* ***C09J 163/00*** *(2006.01)*

(52) Cooperative Patent Classification (CPC):
**C09J 4/00; C09J 11/06; C09J 163/00**

(86) International application number:
**PCT/JP2020/021051**

(87) International publication number:
**WO 2020/241728 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2019 JP 2019102629**
**10.06.2019 JP 2019107895**

(71) Applicant: **Sekisui Chemical Co., Ltd.**
**Osaka 5300047 (JP)**

(72) Inventors:
- **KAWADA, Shinji**
**Mishima-gun, Osaka 618-0021 (JP)**
- **HAYASHI, Hideyuki**
**Mishima-gun, Osaka 618-0021 (JP)**

(74) Representative: **Cabinet Beau de Loménie**
**158, rue de l'Université**
**75340 Paris Cedex 07 (FR)**

# (54) ADHESIVE COMPOSITION, OPTICAL COMPONENT, ELECTRONIC COMPONENT, AND ELECTRONIC MODULE

(57) The present invention aims to provide an adhesive composition capable of suppressing shrinkage on curing and excellent in storage stability and depth curability, or an adhesive composition excellent in adhesion on photocuring, curability by heating at low temperature, and low shrinkability on curing. The present invention also aims to provide an optical component, an electronic component, and an electronic module each including the adhesive composition. Provided is an adhesive composition including: a polymerizable compound; a photopolymerization initiator; and a radical scavenger, the polymerizable compound including a (meth)acrylic compound and a vinyl group-containing cyclic amide compound, the vinyl group-containing cyclic amide compound being contained in an amount of 20 parts by weight or more and 150 parts by weight or less relative to 100 parts by weight of the (meth)acrylic compound, or an adhesive composition including: a polymerizable compound; a photopolymerization initiator; and a heat curing agent, the polymerizable compound including a radical polymerizable compound containing no epoxy group, an epoxy compound containing no radical polymerizable group, and a compound containing an epoxy group and a radical polymerizable group, the heat curing agent including a heat curing agent having a lowest value of a starting range temperature of 80°C or lower.



Printed by Jouve, 75001 PARIS (FR)

## Description

TECHNICAL FIELD

The present invention relates to an adhesive composition capable of suppressing shrinkage on curing and excellent in storage stability and depth curability, or an adhesive composition excellent in adhesion on photocuring, curability by heating at low temperature, and low shrinkability on curing. The present invention also relates to an optical component, an electronic component, and an electronic module each including the adhesive composition.

BACKGROUND ART

Adhesive compositions curable by exposure to light and/or heating are used for fixing of movable components in camera modules including imaging devices such as charge coupled devices (CCD) and complementary metal oxide semiconductors (CMOS).

As such adhesive compositions, Patent Literature 1, for example, discloses a silicone composition prepared by combining specific silicone-based compounds. Patent Literature 2 discloses a liquid epoxy resin composition prepared by combining amino glycidyl ether, an alkenyl group-containing phenol-based curing agent, and a thiol compound having a triazine skeleton. However, conventional adhesive compositions disadvantageously tend to be separated by impact or vibration. In addition, these adhesive compositions may exhibit poor adhesion in temporary fixation or high shrinkability on curing, which disadvantageously causes misalignment of movable components. In particular, adhesive compositions including radical polymerizable compounds are disadvantageously likely to cause warping of adherends, separation of bonded sites, and misalignment of movable components due to shrinkage on curing, and have poor storage stability.

For reducing damage on optical components or electronic components, adhesive compositions have been desired to be fully cured by heating at low temperature.

CITATION LIST

- Patent Literature

Patent Literature 1: JP 2011-057755 A
Patent Literature 2: JP 2014-031461 A

SUMMARY OF INVENTION

- Technical Problem

The present invention aims to provide an adhesive composition capable of suppressing shrinkage on curing and excellent in storage stability and depth curability or an adhesive composition excellent in adhesion on photocuring, curability by heating at low temperature, and low shrinkability on curing. The present invention also aims to provide an optical component, an electronic component, and an electronic module each including the adhesive composition.

- Solution to problem

A present invention 1 is an adhesive composition including: a polymerizable compound; a photopolymerization initiator; and a radical scavenger, the polymerizable compound including a (meth)acrylic compound and a vinyl group-containing cyclic amide compound, the vinyl group-containing cyclic amide compound being contained in an amount of 20 parts by weight or more and 150 parts by weight or less relative to 100 parts by weight of the (meth)acrylic compound.

A present invention 2 is an adhesive composition including: a polymerizable compound; a photopolymerization initiator; a heat curing agent, the polymerizable compound including a radical polymerizable compound containing no epoxy group, an epoxy compound containing no radical polymerizable group, and a compound containing an epoxy group and a radical polymerizable group, the heat curing agent including a heat curing agent having a lowest value of a starting range temperature of 80°C or lower.

The present invention is specifically described in the following. Matters common to the adhesive composition of the present invention 1 and the adhesive composition of the present invention 2 will be described as matters relating to "the adhesive composition of the present invention".

The present inventors made a study on the use of radical scavengers with an aim of suppressing shrinkage of

adhesive compositions on curing and improving the storage stability of adhesive compositions. However, in the case where radical scavengers are used, the resulting adhesive compositions may have poor depth curability in some cases. The present inventors found that the additional use of a polymerizable compound including a (meth)acrylic compound and a vinyl group-containing cyclic amide compound at a specific content ratio can provide an adhesive composition capable of suppressing shrinkage on curing and excellent in storage stability and depth curability. Thus, the present invention 1 was completed.

The present inventors also made a study on the use of a polymerizable compound including a radical polymerizable compound containing no epoxy group, an epoxy compound containing no radical polymerizable group, and a compound containing an epoxy group and a radical polymerizable group in combination and the use of a heat curing agent having a lowest value of a starting range temperature of 80°C or lower. As a result, the present inventors found out that an adhesive composition excellent in adhesion on photocuring, curability by heating at low temperature, and low shrinkability on curing is obtainable. Thus, the present invention 2 was completed.

The adhesive composition of the present invention contains a polymerizable compound.

In the adhesive composition of the present invention 1, the polymerizable compound includes a (meth)acrylic compound and a vinyl group-containing cyclic amide compound. Owing to the use of the (meth)acrylic compound and the vinyl group-containing cyclic amide compound at a content ratio described later, the adhesive composition of the present invention 1 has excellent depth curability while containing a radical scavenger described later.

Herein, the term "(meth)acrylic" means acrylic or methacrylic, the term "(meth)acrylic compound" means a compound containing a (meth)acryloyl group, and the term "(meth)acryloyl" means acryloyl or methacryloyl.

An amide compound containing a (meth)acryloyl group and having a cyclic structure herein is considered as the (meth)acrylic compound, not as the vinyl group-containing cyclic amide compound.

Examples of the (meth)acrylic compound include (meth)acrylic acid ester compounds, epoxy (meth)acrylates, and (meth)acrylamide compounds.

Herein, the term "(meth)acrylate" means acrylate or methacrylate and the term "epoxy (meth)acrylate" means a compound obtained by reacting all the epoxy groups in an epoxy compound with (meth)acrylic acid.

Examples of monofunctional (meth)acrylic acid ester compounds include methyl (meth)acrylate, ethyl (meth)acrylate, propyl (meth)acrylate, n-butyl (meth)acrylate, isobutyl (meth)acrylate, t-butyl (meth)acrylate, 2-ethylhexyl (meth)acrylate, n-octyl (meth)acrylate, isooctyl (meth)acrylate, isononyl (meth)acrylate, isodecyl (meth)acrylate, lauryl (meth)acrylate, isomyristyl (meth)acrylate, stearyl (meth)acrylate, 2-hydroxyethyl (meth)acrylate, 2-hydroxypropyl (meth)acrylate, 2-hydroxy-3-phenoxypropyl (meth)acrylate, 2-hydroxybutyl (meth)acrylate, 4-hydroxybutyl (meth)acrylate, cyclohexyl (meth)acrylate, isobornyl (meth)acrylate, bicyclopentenyl (meth)acrylate, benzyl (meth)acrylate, 2-methoxyethyl (meth)acrylate, 2-ethoxyethyl (meth)acrylate, 2-butoxyethyl (meth)acrylate, 2-phenoxyethyl (meth)acrylate, methoxyethylene glycol (meth)acrylate, methoxypolyethylene glycol (meth)acrylate, phenoxydiethylene glycol (meth)acrylate, phenoxypolyethylene glycol (meth)acrylate, tetrahydrofurfuryl (meth)acrylate, tetrahydrofurfuryl alcohol acrylic acid multimer ester, ethyl carbitol (meth)acrylate, 2,2,2,-trifluoroethyl (meth)acrylate, 2,2,3,3-tetrafluoropropyl (meth)acrylate, 1H,1H,5H-octafluoropentyl (meth)acrylate, imide (meth)acrylate, dimethylaminoethyl (meth)acrylate, diethylaminoethyl (meth)acrylate, 2-(meth)acryloyloxyethyl succinate, 2-(meth)acryloyloxyethyl hexahydrophthalate, 2-(meth)acryloyloxyethyl 2-hydroxypropylphthalate, 2-(meth)acryloyloxyethyl phosphate, (3-ethyloxetan-3-yl) methyl (meth)acrylate, 2-(((butylamino)carbonyl)oxy) ethyl (meth)acrylate, (3-propyloxetan-3-yl) methyl (meth)acrylate, (3-butyloxetan-3-yl) methyl (meth)acrylate, (3-ethyloxetan-3-yl) ethyl (meth)acrylate, (3-ethyloxetan-3-yl) propyl (meth)acrylate, (3-ethyloxetan-3-yl) butyl (meth)acrylate, (3-ethyloxetan-3-yl) pentyl (meth)acrylate, (3-ethyloxetan-3-yl) hexyl (meth)acrylate, γ-butyrolactone (meth)acrylate, (2,2-dimethyl-1,3-dioxolan-4-yl) methyl (meth)acrylate, (2-methyl-2-ethyl-1,3-dioxolan-4-yl) methyl (meth)acrylate, (2-methyl-2-isobutyl-1,3-dioxolan-4-yl) methyl (meth)acrylate, (2-cyclohexyl-1,3-dioxolan-4-yl) methyl (meth)acrylate, and cyclic trimethylolpropane formal acrylate.

Examples of bifunctional (meth)acrylic acid ester compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, ethylene glycol di(meth)acrylate, diethylene glycol di(meth)acrylate, tetraethylene glycol di(meth)acrylate, polyethylene glycol di(meth)acrylate, 2-n-butyl-2-ethyl-1,3-propanediol di(meth)acrylate, dipropylene glycol di(meth)acrylate, tripropylene glycol di(meth)acrylate, polypropylene glycol di(meth)acrylate, neopentyl glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethylol dicyclopentadienyl di(meth)acrylate, ethylene oxide-modified isocyanuric acid di(meth)acrylate, 2-hydroxy-3-(meth)acryloyloxypropyl (meth)acrylate, carbonate diol di(meth)acrylate, polyether diol di(meth)acrylate, polyester diol di(meth)acrylate, polycaprolactone diol di(meth)acrylate, polybutadiene diol di(meth)acrylate, and tricyclodecane dimethanol di(meth)acrylate.

Examples of tri- or higher functional (meth)acrylic acid ester compounds include trimethyrolpropane tri(meth)acrylate, ethylene oxide-added trimethyrolpropane tri(meth)acrylate, propylene oxide-added trimethyrolpropane tri(meth)acrylate, caprolactone-modified trimethyrolpropane tri(meth)acrylate, ethylene oxide-added isocyanuric acid tri(meth)acrylate, glycerol tri(meth)acrylate, propylene oxide-added glycerol tri(meth)acrylate, pentaerythritol

tri(meth)acrylate, tris(meth)acryloyloxyethyl phosphate, ditrimethylolpropane tetra(meth)acrylate, pentaerythritol tetra(meth)acrylate, dipentaerythritol penta(meth)acrylate, and dipentaerythritol hexa(meth)acrylate.

Examples of the epoxy (meth)acrylates include bisphenol A-type epoxy (meth)acrylate, bisphenol F-type epoxy (meth)acrylate, bisphenol E-type epoxy (meth)acrylate, and caprolactone-modified products of these.

Examples of the (meth)acrylamide compounds include N,N-dimethyl (meth)acrylamide, N-(meth)acryloyl morpholine, N-hydroxyethyl (meth)acrylamide, N,N-diethyl (meth)acrylamide, N-isopropyl (meth)acrylamide, and N,N-dimethylamino propyl (meth)acrylamide.

The (meth)acrylic compound may be a compound containing a photopolymerizable functional group and a thermopolymerizable functional group described later. Examples of the (meth)acrylic compound that is the compound containing a photopolymerizable functional group and a thermopolymerizable functional group include glycidyl group-containing (meth)acrylic acid esters and partially (meth)acrylic-modified epoxy compounds.

Herein, the term "partially (meth)acrylic-modified epoxy compounds" means a compound containing one or more epoxy groups and one or more (meth)acryloyl groups in one molecule, which is obtainable by reacting part of epoxy groups in an epoxy compound containing two or more epoxy groups in one molecule with (meth)acrylic acid.

Examples of the glycidyl group-containing (meth)acrylic acid esters include glycidyl (meth)acrylate, 2-hydroxyethyl (meth)acrylate glycidyl ether, 2-hydroxypropyl (meth)acrylate glycidyl ether, 3-hydroxypropyl (meth)acrylate glycidyl ether, 4-hydroxybutyl (meth)acrylate glycidyl ether, and polyethylene glycolpolypropylene glycol (meth)acrylate glycidyl ether.

Examples of the partially (meth)acrylic-modified epoxy compounds include partially (meth)acrylic-modified bisphenol A-type epoxy compounds, partially (meth)acrylicmodified bisphenol F-type epoxy compounds, and partially (meth)acrylic-modified bisphenol E-type epoxy compounds.

The lower limit of the amount of the (meth)acrylic compound in 100 parts by weight of the polymerizable compound is preferably 15 parts by weight and the upper limit thereof is preferably 70 parts by weight. When the amount of the (meth)acrylic compound is 15 parts by weight or more, the resulting adhesive composition has still higher photocuring properties. When the amount of the (meth)acrylic compound is 70 parts by weight or less, the resulting adhesive composition exhibits a still higher effect of suppressing shrinkage on curing. The lower limit of the amount of the (meth)acrylic compound is more preferably 25 parts by weight and the upper limit thereof is more preferably 45 parts by weight.

Examples of the vinyl group-containing cyclic amide compound include compounds represented by the following formula (1).

[Chem. 1]

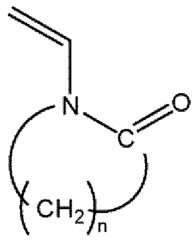

(1)

In the formula (1), n represents an integer of 2 to 6.

Examples of the compounds represented by the formula (1) include N-vinyl-2-pyrrolidone and N-vinyl-ε-caprolactam. Preferred among these is N-vinyl-ε-caprolactam.

The lower limit of the amount of the vinyl group-containing cyclic amide compound relative to 100 parts by weight of the (meth)acrylic compound is 20 parts by weight and the upper limit thereof is 150 parts by weight. When the amount of the vinyl group-containing cyclic amide compound relative to 100 parts by weight of the (meth)acrylic compound is 20 parts by weight or more, the resulting adhesive composition has excellent depth curability. When the amount of the vinyl group-containing cyclic amide compound relative to 100 parts by weight of the (meth)acrylic compound is 150 parts by weight or less, the resulting adhesive composition has excellent storage stability. The lower limit of the amount of the vinyl group-containing cyclic amide compound relative to 100 parts by weight of the (meth)acrylic compound is preferably 35 parts by weight and the upper limit thereof is preferably 125 parts by weight. The lower limit is more preferably 50 parts by weight and the upper limit is more preferably 100 parts by weight.

The polymerizable compound preferably includes a compound containing a photopolymerizable functional group and a thermopolymerizable functional group. When the polymerizable compound includes the compound containing a photopolymerizable functional group and a thermopolymerizable functional group, the adhesive composition of the present invention 1 can be cured by heating even in a part where light does not reach, if present.

Examples of the photopolymerizable functional group include a (meth)acryloyl group, a vinyl group, and a cyclic

ether group. Preferred among these is a (meth)acryloyl group.

Examples of the thermopolymerizable functional group include a cyclic ether group, a (meth)acryloyl group, and a vinyl group. Among these, preferred is a cyclic ether group and more preferred is an epoxy group.

The lower limit of the amount of the compound containing a photopolymerizable functional group and a thermopolymerizable functional group in 100 parts by weight of the polymerizable compound is preferably 10 parts by weight and the upper limit thereof is preferably 150 parts by weight. When the amount of the compound containing a photopolymerizable functional group and a thermopolymerizable functional group is within this range, the resulting adhesive composition is more easily cured by exposure to light and heating. The lower limit of the amount of the compound containing a photopolymerizable functional group and a thermopolymerizable functional group is more preferably 30 parts by weight and the upper limit thereof is more preferably 70 parts by weight.

The polymerizable compound preferably further includes a heat-curable compound.

The heat-curable compound may be, for example, an epoxy compound.

Examples of the epoxy compound include a bisphenol A-type epoxy compound, a bisphenol E-type epoxy compound, a bisphenol F-type epoxy compound, a bisphenol S-type epoxy compound, a bisphenol O-type epoxy compound, a 2,2'-diallyl bisphenol A-type epoxy compound, an alicyclic epoxy compound, a hydrogenated bisphenol-type epoxy compound, a propylene oxide-added bisphenol A-type epoxy compound, a resorcinol-type epoxy compound, a biphenyl-type epoxy compound, a sulfide-type epoxy compound, a diphenyl ethertype epoxy compound, a dicyclopentadiene-type epoxy compound, a naphthalene-type epoxy compound, a phenol novolac-type epoxy compound, an o-cresol novolac-type epoxy compound, a dicyclopentadiene novolac-type epoxy compound, a biphenyl novolac-type epoxy compound, a naphthalene phenol novolac-type epoxy compound, a glycidyl amine-type epoxy compound, an alkyl polyol-type epoxy compound, a rubber-modified epoxy compound, and a glycidyl ester compound.

The lower limit of the amount of the heat-curable compound in 100 parts by weight of the polymerizable compound is preferably 15 parts by weight and the upper limit thereof is preferably 70 parts by weight. When the amount of the heat-curable compound is within this range, the resulting adhesive composition is more easily cured by exposure to light and heating. The lower limit of the amount of the heat-curable compound is more preferably 25 parts by weight and the upper limit thereof is more preferably 45 parts by weight.

In the adhesive composition of the present invention 2, the polymerizable compound includes a radical polymerizable compound containing no epoxy group, an epoxy compound containing no radical polymerizable group, and a compound containing an epoxy group and a radical polymerizable group.

The radical polymerizable compound containing no epoxy group is preferably an ethylenic unsaturated double bond-containing compound, more preferably a vinyl compound or a (meth)acrylic compound.

The radical polymerizable compound containing no epoxy group preferably includes, as the vinyl compound, a compound containing one vinyl group in one molecule, more preferably includes the vinyl group-containing cyclic amide compound described in the present invention 1.

When the radical polymerizable compound containing no epoxy group includes the vinyl group-containing cyclic amide compound, the resulting adhesive composition has still higher adhesion on photocuring, exerting a better effect of preventing misalignment of movable components.

Examples of the vinyl group-containing cyclic amide compound include the compounds represented by the above formula (1). In particular, N-vinyl-2-pyrrolidone and/or N-vinyl-ε-caprolactam is/are preferably used.

Examples of the (meth)acrylic compound include the (meth)acrylic acid ester compound, the epoxy (meth)acrylate, and the (meth)acrylamide compound described in the present invention 1.

Examples of the epoxy compound containing no radical polymerizable group include the epoxy compounds described in the present invention 1.

Examples of the compound containing an epoxy group and a radical polymerizable group include the glycidyl group-containing (meth)acrylic acid esters and the partially (meth)acrylic-modified epoxy compounds described in the present invention 1.

When the adhesive composition of the present invention 2 is used at a site where an alignment step is required, the adhesive composition of the present invention 2 preferably includes, as the compound containing an epoxy group and a radical polymerizable group, a compound containing an epoxy group and a (meth)acryloyl group. The "alignment step" may be, for example, an active alignment step in the case of camera modules.

The lower limit of the total amount of compounds containing a radical polymerizable group in 100 parts by weight of the polymerizable compound is preferably 45 parts by weight and the upper limit thereof is preferably 90 parts by weight. When the total amount of compounds containing a radical polymerizable group is 45 parts by weight or more, the resulting adhesive composition exhibits still higher adhesion on photocuring. When the total amounts of compounds containing a radical polymerizable group is 90 parts by weight or less, the resulting adhesive composition has still lower shrinkability on curing and still higher curability by heating at low temperature. The lower limit of the total amounts of compounds containing a radical polymerizable group is more preferably 50 parts by weight and the upper limit thereof is more preferably 85 parts by weight.

Herein, the term "total amount of compounds containing a radical polymerizable group" means the total amount of the radical polymerizable compound containing no epoxy group and the compound containing an epoxy group and a radical polymerizable group.

The adhesive composition of the present invention includes a photopolymerization initiator.

The photopolymerization initiator used is suitably a photoradical polymerization initiator.

Examples of the photoradical polymerization initiator include a benzophenone compound, an acetophenone compound, an acylphosphine oxide compound, a titanocene compound, an oxime ester compound, a benzoin ether compound, and a thioxanthone compound.

Specific examples of the photoradical polymerization initiator include 1-hydroxycyclohexyl phenyl ketone, 2-benzyl-2-(dimethylamino)-1-(4-((morpholino)phenyl)-1-butanone, 2-(dimethylamino)-2-((4-methylphenyl)methyl)-1-(4-(4-morpholinyl)phenyl)-1-butanone, 2,2-dimethoxy-1,2-diphenylethan-1-one, bis(2,4,6-trimethylbenzoyl)phenylphosphine oxide, 2-methyl-1-(4-methylthiophenyl)-2-morpholinopropan-1-one, 1-(4-(2-hydroxyethoxy)-phenyl)-2-hydroxy-2-methyl-1-propan-1-one, 1-(4-(phenylthio)phenyl)-1,2-octanedione-2-(O-benzoyl oxime), 2,4,6-trimethylbenzoyl diphenylphosphine oxide, benzoin methyl ether, benzoin ethyl ether, and benzoin isopropyl ether.

The lower limit of the amount of the photopolymerization initiator relative to 100 parts by weight of the polymerizable compound is preferably 0.1 parts by weight and the upper limit thereof is preferably 5 parts by weight. When the amount of the photopolymerization initiator is within this range, the resulting adhesive composition has still higher photocuring properties, while maintaining excellent storage stability. The lower limit of the amount of the photopolymerization initiator is more preferably 0.2 parts by weight and the upper limit thereof is more preferably 3 parts by weight. The lower limit is still more preferably 0.3 parts by weight and the upper limit is still more preferably 2.5 parts by weight. The lower limit is particularly preferably 0.5 parts by weight and the upper limit is particularly preferably 2 parts by weight.

The adhesive composition of the present invention may include, in addition to the photopolymerization initiator, a thermopolymerization initiator.

The thermopolymerization initiator used is suitably a heat radical polymerization initiator.

Examples of the heat radical polymerization initiator include those containing an azo compound, an organic peroxide, or the like. Among these, preferred is an initiator including an azo compound (hereafter, also referred to as "azo initiator").

The azo compound may be, for example, a compound having a structure where multiple units such as polyalkylene oxide units or poly(dimethylsiloxane) units are bonded via azo groups.

A polymeric azo compound having the structure where multiple units such as polyalkylene oxide units are bonded via azo groups preferably has a polyethylene oxide structure.

Specific examples of the azo compound include a polycondensate of 4,4'-azobis(4-cyanopentanoic acid) and polyalkylene glycol and a polycondensate of 4,4'-azobis(4-cyanopentanoic acid) and poly(dimethylsiloxane) having a terminal amino group.

Examples of the organic peroxide include ketone peroxides, peroxy ketals, hydroperoxides, dialkyl peroxides, peroxy esters, diacyl peroxides, and peroxydicarbonates.

The lower limit of the amount of the thermopolymerization initiator relative to 100 parts by weight of the polymerizable compound is preferably 0.1 parts by weight and the upper limit thereof is preferably 10 parts by weight. When the amount of the thermopolymerization initiator is within this range, the resulting adhesive composition has still higher heat curing properties, while maintaining excellent storage stability. The lower limit of the amount of the thermopolymerization initiator is more preferably 0.2 parts by weight and the upper limit thereof is more preferably 7 parts by weight. The lower limit is still more preferably 0.3 parts by weight and the upper limit is still more preferably 5 parts by weight. The lower limit is particularly preferably 0.5 parts by weight and the upper limit is particularly preferably 1 part by weight.

The adhesive composition of the present invention 1 includes a radical scavenger.

Including the radical scavenger, the adhesive composition of the present invention 1 can suppress shrinkage on curing and is excellent in storage stability.

Herein, the term "radical scavenger" means a compound that stops formation or reaction of radicals or stabilizes radicals.

Examples of the radical scavenger include imidazole compounds, amine compounds, polyvinyl acetal resins, urethane compounds, phenol compounds, and polycarbonate compounds. Preferred among these are imidazole compounds.

Examples of the imidazole compounds include imidazole, 2-methylimidazole, 1,2-dimethylimidazole, 2-ethyl-4-methylimidazole, 2-undecylimidazole, 2-heptadecylimidazole, 2-phenylimidazole, 2-phenyl-4-methylimidazole, 1-benzylimidazole, 1-benzyl-2-phenylimidazole, and 1-cyanoethyl-2-methylimidazole.

Examples of the amine compounds include trimethylamine, triethylamine, N,N-dimethyl piperazine, triethylenediamine, benzyl dimethylamine, 2-(dimethylaminomethyl)phenol, 2,4,6-tris(dimethylaminomethyl)phenol, 1,8-diazabicyclo(5.4.0)-undecene-7, and 1,5-diazabicyclo(4.3.0)-nonene-5.

The polyvinyl acetal resin includes an acetal group-containing structural unit represented by the following

formula (2-1), a hydroxy group-containing structural unit represented by the following formula (2-2), and an acetyl group-containing structural unit represented by the following formula (2-3).

[Chem. 2]

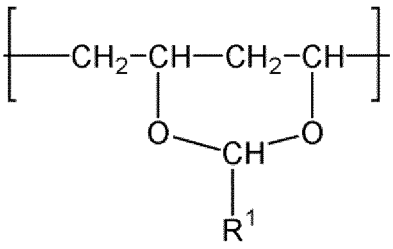

(2-1)

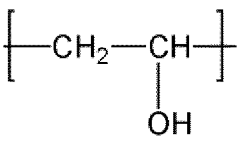

(2-2)

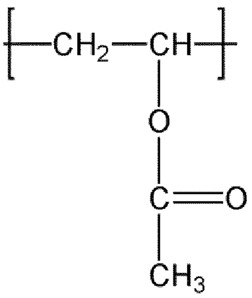

(2-3)

In the formula (2-1), $R^1$ represents a hydrogen atom or a C1-C20 alkyl group.

Examples of the C1-C20 alkyl group include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group. Among these, preferred are a methyl group, an ethyl group, and a propyl group.

The polyvinyl acetal resin is preferably a polyvinyl butyral resin including a structural unit represented by the formula (2-1) in which $R^1$ is a propyl group.

The urethane compound may be, for example, a moisture-curable urethane resin.

The moisture-curable urethane resin contains a urethane bond and an isocyanate group and is cured by reaction of the isocyanate group in the molecule with moisture. The isocyanate group is preferably present at a terminal of a molecule.

The moisture-curable urethane resin is obtainable by reacting a polyol compound containing two or more hydroxy groups in one molecule and a polyisocyanate compound containing two or more isocyanate groups in one molecule.

In particular, preferred is a polycarbonate-based urethane prepolymer.

Examples of the phenol compound include hydroquinone, hindered phenol-based compounds, bisphenol F-based compounds, bisphenol E-based compounds, bisphenol A-based compounds, and polymers thereof.

Among the radical scavengers, the imidazole compounds and the amine compounds are also usable as a heat curing agent described later.

The lower limit of the amount of the radical scavenger relative to 100 parts by weight of the polymerizable compound is preferably 0.1 parts by weight and the upper limit thereof is preferably 160 parts by weight. When the amount of the radical scavenger is 0.1 parts by weight or more, the resulting adhesive composition exhibits a still higher effect of suppressing shrinkage on curing and has still higher storage stability. When the amount of the radical scavenger is 160 parts by weight or less, the resulting adhesive composition has still higher depth curability. The lower limit of the amount of the radical scavenger is more preferably 0.4 parts by weight and the upper limit thereof is more preferably

100 parts by weight.

The adhesive composition of the present invention 2 includes a heat curing agent.

In the case where the adhesive composition of the present invention 1 includes, as the polymerizable compound, the compound containing a photopolymerizable functional group and a thermopolymerizable functional group or the heat-curable compound, the adhesive composition of the present invention 1 preferably contains a heat curing agent.

The heat curing agent preferably has a melting point of 100°C or lower. When the heat curing agent has a melting point of 100°C or lower, the adhesive composition of the present invention has still higher curability by heating at low temperature. The heat curing agent more preferably has a melting point of 80°C or lower.

In the adhesive composition of the present invention 2, the heat curing agent includes a heat curing agent having a lowest value of a starting range temperature of 80°C or lower. Containing the heat curing agent having a lowest value of a starting range temperature of 80°C or lower, the adhesive composition of the present invention 2 is excellent in low-temperature curability. The heat curing agent has a lowest value of a starting range temperature of preferably 79°C or lower, more preferably 78°C or lower.

From the standpoint of storage stability, the heat curing agent preferably has a lowest value of a starting range temperature of 70°C or higher.

The "lowest value of a starting range temperature" can be measured as a reaction starting temperature in differential scanning calorimetry (DSC) in which 100 parts by weight of a bisphenol A-type epoxy resin and 5 parts by weight of the heat curing agent are mixed and the temperature of the mixture is raised at 5°C/min.

Examples of the heat curing agent include imidazole-based curing agents and amine-based curing agents. In particular, the heat curing agent having a lowest value of a starting range temperature of 80°C or lower in the adhesive composition of the present invention 2 preferably includes an imidazole-based curing agent.

Examples of the imidazole-based curing agents include imidazole, 2-methylimidazole, 1,2-dimethylimidazole, 2-ethyl-4-methylimidazole, 2-undecylimidazole, 2-heptadecylimidazole, 2-phenylimidazole, 2-phenyl-4-methylimidazole, 1-benzylimidazole, 1-benzyl-2-phenylimidazole, and 1-cyanoethyl-2-methylimidazole.

Examples of the imidazole-based curing agent having a lowest value of a starting range temperature of 80°C or lower include 2-methylimidazole (starting range temperature: 76°C to 92°C) and 1-benzyl-2-methylimidazole (starting range temperature: 79°C to 106°C).

Examples of the amine-based curing agents include trimethylamine, triethylamine, N,N-dimethylpiperazine, triethylenediamine, benzyl dimethylamine, 2-(dimethylaminomethyl)phenol, 2,4,6-tris(dimethylaminomethyl)phenol, 1,8-diazabicyclo(5.4.0)-undecene-7, and 1,5-diazabicyclo(4.3.0)-nonene-5.

The lower limit of the amount of the heat curing agent relative to 100 parts by weight of the polymerizable compound is preferably 0.1 parts by weight and the upper limit thereof is preferably 7 parts by weight. When the amount of the heat curing agent is within this range, the resulting adhesive composition has still higher heat curing properties, while maintaining excellent storage stability. The lower limit of the amount of the heat curing agent is more preferably 0.2 parts by weight and the upper limit thereof is more preferably 5 parts by weight. The lower limit is still more preferably 0.3 parts by weight and the upper limit is still more preferably 4 parts by weight. The lower limit is particularly preferably 0.5 parts by weight and the upper limit is particularly preferably 3 parts by weight.

The adhesive composition of the present invention preferably includes a filler for the purpose of improving viscosity, further improving adhesion by a stress dispersion effect, and improving the linear expansion coefficient or the like.

The filler used may be an inorganic filler or an organic filler.

Examples of the inorganic filler include silica, talc, glass beads, asbestos, calcium sulphate, diatom earth, smectite, bentonite, montmorillonite, sericite, active china clay, alumina, zinc oxide, iron oxide, magnesium oxide, tin oxide, titanium oxide, calcium carbonate, magnesium carbonate, magnesium hydroxide, aluminum hydroxide, aluminum nitride, silicon nitride, barium sulphate, and calcium silicate.

Examples of the organic filler include polyester fine particles, polyurethane fine particles, vinyl polymer fine particles, and acrylic polymer fine particles.

Among these, the filler preferably includes silica having a methyl-treated surface. When the filler used is the silica having a methyl-treated surface, the resulting adhesive composition has excellent adhesion and a thixotropic index thereof, which is described later, is easily adjustable.

The lower limit of the amount of the filler in 100 parts by weight of the adhesive composition of the present invention is preferably 0.1 parts by weight and the upper limit thereof is preferably 70 parts by weight. When the amount of the filler is within this range, the filler can highly exhibit an effect such as improvement of adhesion, while avoiding an adverse effect on the application properties of the resulting adhesive composition. The lower limit of the amount of the filler is more preferably 5.0 parts by weight and the upper limit thereof is more preferably 50 parts by weight.

The lower limit of the amount of the filler relative to 100 parts by weight of the polymerizable compound is preferably 5 parts by weight and the upper limit thereof is preferably 50 parts by weight. When the amount of the filler is within this range, the filler can highly exhibit an effect such as improvement of adhesion, while avoiding an adverse

effect on the application properties. The lower limit of the amount of the filler is more preferably 10 parts by weight and the upper limit thereof is more preferably 40 parts by weight.

The adhesive composition of the present invention may include a light-blocking agent. Including the light-blocking agent, the adhesive composition of the present invention is suitably usable as a light-blocking adhesive.

Examples of the light-blocking agent include iron oxide, titanium black, aniline black, cyanine black, fullerene, carbon black, and resin-coated carbon black. Preferred among these is titanium black.

Each of these light-blocking agents may be used alone or in combination of two or more.

The titanium black is a substance that has a higher transmittance in and around the UV region, especially of light having a wavelength of 370 nm or longer and 450 nm or shorter, compared to an average transmittance of light having a wavelength of 300 nm or longer and 450 nm or shorter. In other words, the titanium black is a light-blocking agent that sufficiently blocks light having a wavelength within a visible light region to provide light blocking properties to the adhesive composition of the present invention and allows light having a wavelength in and around the UV region to transmit. The light-blocking agent is preferably a highly insulating substance. Titanium black is suitable also as the highly insulating light-blocking agent.

The titanium black can exhibit a sufficient effect even when it is not surface-treated. Yet, also usable is a surface-treated titanium black such as titanium black having a surface treated with an organic component (e.g., coupling agent) or titanium black having a surface coated with an inorganic component (e.g., silicon oxide, titanium oxide, germanium oxide, aluminum oxide, zirconium oxide, magnesium oxide). Among these, preferred is titanium black having a surface treated with an organic component as it can further improve insulation properties.

Examples of commercial products of the titanium black include titanium black products available from Mitsubishi Materials Corporation and titanium black products available from Ako Kasei Co., Ltd.

Examples of the titanium black products available from Mitsubishi Materials Corporation include 12S, 13M, 13M-C, 13R-N, and 14M-C.

Examples of the titanium black products available from Ako Kasei Co., Ltd. include Tilack D.

The lower limit of the specific surface area of the titanium black is preferably 13 $m^2/g$ and the upper limit thereof is preferably 30 $m^2/g$. The lower limit is more preferably 15 $m^2/g$ and the upper limit is more preferably 25 $m^2/g$.

The lower limit of the volume resistance of the titanium black is preferably 0.5 $\Omega\cdot cm$ and the upper limit thereof is preferably 3 $\Omega\cdot cm$. The lower limit is more preferably 1 $\Omega\cdot cm$ and the upper limit is more preferably 2.5 $\Omega\cdot cm$.

The lower limit of the primary particle size of the light-blocking agent is preferably 1 nm and the upper limit thereof is preferably 5,000 nm. When the primary particle size of the light-blocking agent is within this range, the resulting adhesive composition has still higher light-blocking properties. The lower limit of the primary particle size of the light-blocking agent is more preferably 5 nm and the upper limit thereof is more preferably 200 nm. The lower limit is still more preferably 10 nm and the upper limit is still more preferably 100 nm.

The primary particle size of the light-blocking agent can be obtained by performing measurement on the light-blocking agent dispersed in a solvent (e.g., water, organic solvent) using NICOMP 380ZLS (available from PARTICLE SIZING SYSTEMS).

The lower limit of the amount of the light-blocking agent in 100 parts by weight of the adhesive composition of the present invention is preferably 0.2 parts by weight and the upper limit thereof is preferably 5 parts by weight. When the amount of the light-blocking agent is within this range, the light-blocking agent can exhibit a still higher effect of improving light-blocking properties, while suppressing an adverse effect on the adhesion, strength after curing, and drawability of the resulting adhesive composition. The lower limit of the amount of the light-blocking agent is more preferably 0.5 parts by weight and the upper limit thereof is more preferably 3 parts by weight.

The adhesive composition of the present invention may include a silane coupling agent for the purpose of further improving adhesion or the like.

Suitable examples of the silane coupling agent include 3-aminopropyltrimethoxysilane, 3-mercaptopropyltrimethoxysilane, 3-glycidoxypropyltrimethoxysilane, and 3-(meth)acryloyloxypropyltrimethoxysilane.

The lower limit of the amount of the silane coupling agent in 100 parts by weight of the adhesive composition of the present invention is preferably 0.1 parts by weight and the upper limit thereof is preferably 5.0 parts by weight. when the amount of the silane coupling agent is within this range, the silane coupling agent can exhibit a higher effect of improving adhesion, while suppressing bleeding thereof or the like. The lower limit of the amount of the silane coupling agent is more preferably 0.3 parts by weight and the upper limit thereof is more preferably 3.0 parts by weight.

The adhesive composition of the present invention may include a viscosity modifier for the purpose of improving wettability to adherends in short time and shape retainability.

Examples of the viscosity modifier include fumed silica and layered silicate.

Each of the viscosity modifiers may be used alone or in combination of two or more.

The lower limit of the amount of the viscosity modifier in 100 parts by weight of the adhesive composition of the present invention is preferably 0.5 parts by weight and the upper limit thereof is preferably 20 parts by weight. When the amount of the viscosity modifier is within this range, the viscosity modifier exhibits a higher effect of improving

wettability to adherends in short time and shape retainability. The lower limit of the amount of the viscosity modifier is more preferably 1.0 parts by mass and the upper limit thereof is more preferably 10 parts by weight.

The adhesive composition of the present invention preferably contains conductive particles. Containing the conductive particles, the adhesive composition of the present invention is suitably used for a conductive paste or the like.

The conductive particles used may be metal balls, resin fine particles having a conductive metal layer formed on their surfaces, or the like. Among these, resin fine particles having a conductive metal layer formed on their surfaces are suitable as they enable conductive connection without damaging transparent substrates or the like owing to excellent elasticity of the resin fine particles.

The lower limit of the amount of the conductive particles in 100 parts by weight of the adhesive composition of the present invention is preferably 0.1 parts by weight and the upper limit thereof is preferably 20 parts by weight. When the amount of the conductive particles is within this range, the conductive particles can exhibit a higher effect of improving conductivity, while suppressing an adverse effect on application properties or the like. The lower limit of the amount of the conductive particles is more preferably 1.0 parts by weight and the upper limit thereof is more preferably 15.0 parts by weight.

The adhesive composition of the present invention may further contain additives such as crosslinking agents, organic solvents, plasticizers, dispersants, and pigments within a range the purpose of the present invention is not disturbed.

Examples of the crosslinking agents include halohydrin compounds, halogen compounds, isocyanate compounds, bisacrylamide compounds, urea compounds, guanidine compounds, dicarboxylic acid compounds, unsaturated carboxylic acid compounds, unsaturated carboxylic acid ester compounds, and aldehyde compounds.

Examples of the halohydrin compounds include epichlorohydrin and epibromohydrin.

Examples of the halogen compounds include 1,2-dichloroethane and 1,3-dichloropropane.

Examples of the isocyanate compounds include hexamethylene diisocyanate.

Examples of the bisacrylamide compounds include N,N'methylene bisacrylamide and N,N'-ethylene bisacrylamide.

Examples of the urea compounds include urea and thiourea.

Examples of the guanidine compounds include guanidine and diguanide.

Examples of the dicarboxylic acid compounds include oxalic acid and adipic acid.

Examples of the unsaturated carboxylic acid compounds include acrylic acid and methacrylic acid.

Examples of the unsaturated carboxylic acid ester compounds include methyl acrylate, methyl methacrylate, 2-ethylhexyl acrylate, isobutyl acrylate, butyl acrylate, 2-ethylhexyl methacrylate, isobutyl methacrylate, and butyl methacrylate.

Examples of the aldehyde compounds include glyoxal, glutaraldehyde, malonaldehyde, succinaldehyde, adipaldehyde, phthalaldehyde, isophthalaldehyde, and terephthalaldehyde.

Each of these crosslinking agents may be used alone or in combination of two or more. These crosslinking agents may be dissolved in water or an organic solvent (e.g., alcohol) before use, if needed.

Examples of the organic solvent include ketones, alcohols, aromatic hydrocarbons, esters, methyl cellosolve, ethyl cellosolve, butyl cellosolve, terpineol, dihydroterpineol, butyl cellosolve acetate, butyl carbitol acetate, terpineol acetate, and dihydroterpineol acetate.

Examples of the ketones include acetone, methyl ethyl ketone, dipropyl ketone, and diisobutyl ketone.

Examples of the alcohols include methanol, ethanol, isopropanol, and butanol.

Examples of the aromatic hydrocarbons include toluene and xylene.

Examples of the esters include methyl propionate, ethyl propionate, butyl propionate, methyl butanoate, ethyl butanoate, butyl butanoate, methyl pentanoate, ethyl pentanoate, butyl pentanoate, methyl hexanoate, ethyl hexanoate, butyl hexanoate, 2-ethylhexyl acetate, and 2-ethylhexyl butyrate.

The adhesive composition of the present invention preferably does not contain the organic solvent. Yet, in the case where the adhesive composition of the present invention contains the organic solvent, the upper limit of the amount of the organic solvent is preferably 10.0% by weight. When the amount of the organic solvent is 10.0% by weight or less, curing inhibition is not likely to occur.

The adhesive composition of the present invention 1 can be produced, for example, by mixing the polymerizable compound, the photopolymerization initiator, the radical scavenger, and optionally the silane coupling agent and like additives using a mixer.

The adhesive composition of the present invention 2 can be produced, for example, by mixing the polymerizable compound, the photopolymerization initiator, the heat curing agent, and optionally the filler and like additives using a mixer.

Examples of the mixer include homogenizing dispersers, homomixers, universal mixers, planetary mixers, kneaders, and three-roll mills.

The lower limit of the thixotropic index of the adhesive composition of the present invention is preferably 3.0 and the upper limit thereof is preferably 7.0. When the thixotropic index is within this range, a suitable application height

upon application of the resulting adhesive composition can be ensured, leading to a higher effect of preventing misalignment of movable components. The lower limit of the thixotropic index is more preferably 4.0 and the upper limit thereof is more preferably 6.0.

The "thixotropic index" herein means a value obtained by dividing the viscosity measured using an E-type viscometer under the conditions of 25°C and 0.5 rpm by the viscosity measured using an E-type viscometer under the conditions of 25°C and 5.0 rpm.

The adhesive composition of the present invention preferably has a curing shrinkage of 3% or lower. When the curing shrinkage is 3% or lower, the adhesive composition of the present invention exhibits a higher effect of suppressing warping of adherends or separation of bonded sites and a higher effect of preventing misalignment of movable components. Thus, the adhesive composition of the present invention is suitably used for fixation of movable components. The curing shrinkage is more preferably 2.7% or lower.

The lower limit of the curing shrinkage is not limited. Yet, the lower limit is practically 1%.

The "curing shrinkage" herein is a value obtained by the calculation using the following equation in which $G_A$ denotes the specific gravity of the adhesive composition before curing at 25°C and $G_B$ denotes the specific gravity of a cured product of the adhesive composition at 25°C.

$$\text{Curing shrinkage (\%)} = ((G_B - G_A)/G_B) \times 100$$

The cured product used for the measurement of the specific gravity is prepared by irradiating the adhesive composition with UV light having a wavelength of 365 nm to a dose of 1000 mJ/cm$^2$, followed by heating at 80°C for one hour.

The adhesive composition of the present invention is suitably used for fixation of movable components, and may be used for fixation of metallic parts of movable components or fixation of nonmetallic parts of movable components.

Examples of the metal constituting the metallic parts include copper and nickel.

Examples of the nonmetal constituting the nonmetallic parts include polyamide, polyphenylene sulfide, polycarbonate, liquid crystal polymers (LCP), and ceramic.

Since the adhesive composition of the present invention is excellent in adhesion on photocuring and low shrinkability on curing, it can be suitably used for fixation of movable components which requires an alignment step involving temporary fixation carried out by exposure to light. Since the adhesive composition of the present invention 2 is excellent in curability by heating at low temperature, damage to optical components or electronic components can be reduced.

The "alignment step" may be an active alignment step in the case of camera modules, for example.

The present invention also encompasses an optical component including a cured product of the adhesive composition of the present invention and an electronic component including a cured product of the adhesive composition of the present invention.

The present invention also encompasses an electronic module including the optical component of the present invention or the electronic component of the present invention.

Examples of the electronic module of the present invention include a camera module and a display module. Among these, a camera module is suitable. In other words, the adhesive composition of the present invention is suitably used as an adhesive for camera modules.

Specific examples of the camera module include those including a cured product of the adhesive composition of the present invention between the substrate and the imaging device (e.g., CCD, CMOS), between the substrate and the cut-off filter, between the substrate and the casing, or between the casing and the lens unit.

- Advantageous Effects of Invention

The present invention can provide an adhesive composition capable of suppressing shrinkage on curing and excellent in storage stability and depth curability and an adhesive composition excellent in adhesion upon photocuring, curability by heating at low temperature, and low shrinkability on curing. The present invention can also provide an optical component, an electronic component, and an electronic module each including the adhesive composition.

DESCRIPTION OF EMBODIMENTS

The present invention is more specifically described with reference to, but not limited to, examples.

(Examples 1 to 15, Comparative Examples 1 to 5)

Materials were mixed according to the compounding ratios in Tables 1 to 3 using a mixer to prepare adhesive compositions of Examples 1 to 15 and Comparative Examples 1 to 5. The mixer used was ARE-310 (available from Thinky Corporation).

In Tables 1 to 3, "UVACURE 1561" is a mixture containing about 50% by weight of a partially acrylicmodified bisphenol A-type epoxy resin, about 25% by weight of bisphenol A-type epoxy acrylate, and about 25% by weight of a bisphenol A-type epoxy resin (about 75% by weight of acrylic compound content).

<Evaluation>

The following evaluations were performed on the adhesive compositions obtained in Examples 1 to 15 and Comparative Examples 1 to 5. Tables 1 to 3 show the results.

(Storage stability)

The adhesive compositions obtained in Examples 1 to 15 and Comparative Examples 1 to 5 were each charged into a syringe and stored in a thermostatic chamber at 25°C. The viscosity was measured right after the production, after storage for 24 hours, after storage for 48 hours, and after storage for one week. The viscosity change rate was derived from (viscosity after storage for each prescribed time)/(viscosity right after the production).

The storage stability was evaluated based on the following criteria: the case where the viscosity change rate after storage for one week was less than 1.2 was rated as "oo (Excellent)"; the case where the viscosity change rate after storage for 48 hours was less than 1.2 and the viscosity change rate after storage for one week was 1.2 or more was rated as "o (Good)"; the case where the viscosity change rate after storage for 24 hours was less than 1.2 and the viscosity change rate after storage for 48 hours was 1.2 or more was rated as "Δ (Fair)"; and the case where the viscosity change rate after storage for 24 hours was 1.2 or more was rated as "× (Poor)".

The viscosity of the adhesive composition was measured using an E-type viscometer ("DV-III" available from BROOK FIELD) at 25°C and a rotation speed of 1.0 rpm.

(Depth curability)

The adhesive compositions obtained in Examples 1 to 15 and Comparative Examples 1 to 5 were each charged into a black polycarbonate container with a hole having a diameter of 3 mm. To the hole, UV light (wavelength of 365 nm) was applied to a dose of 1,000 mJ/$cm^2$. The curing depth from the surface of the adhesive composition was measured with a caliper.

The depth curability was evaluated based on the following criteria: the case where the curing depth was 2 mm or more was rated as "oo (Excellent)"; the case where the curing depth was 1 mm or more and less than 2 mm was rated as "o (Good)"; the case where the curing depth was 300 μm or more and less than 1 mm was rated as "Δ (Fair)"; and the case where the curing depth was less than 300 μm was rated as "× (Poor)".

(Low shrinkability on curing)

The adhesive compositions obtained in Examples 1 to 15 and Comparative Examples 1 to 5 were each irradiated with UV light (wavelength of 365 nm) to a dose of 1,000 mJ/$cm^2$, followed by heating at 80°C for one hour. Thus, a cured product having a size of 15 mm in length, 15 mm in width, and 2 mm in thickness was obtained. Measurement of specific gravity was performed on the adhesive compositions before curing at 25°C and the cured products of the adhesive compositions at 25°C. The curing shrinkage was calculated using the equation described above.

The low shrinkability on curing was evaluated based on the following criteria: the case where the curing shrinkage was not higher than 2.7% was rated as "oo (Excellent)"; the case where the curing shrinkage was higher than 2.7% and not higher than 3.0% was rated as "o (Good)"; the case where the curing shrinkage was higher than 3.0% and not higher than 5.0% was rated as "Δ (Fair)"; and the case where the curing shrinkage was higher than 5.0% was rated as "× (Poor)".

[Table 1]

| | | | | Example | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| Composition (parts by weight) | Polymerizable compound | (Meth)acrylic compound | 2-(((Butylamino)carbonyl)oxy) ethyl (meth)acrylate[a] | 28.5 | 19.0 | 3.1 | 3.1 | 3.1 | 3.1 | 3.1 | 3.1 | 3.1 | 3.1 | 3.1 |
| | | | 2-Phenoxyethyl acrylate[b] | 4.5 | 3.0 | 0.6 | 0.6 | 0.6 | 0.6 | 0.6 | 0.6 | 0.6 | 0.6 | 0.6 |
| | | | Isodecyl acrylate[c] | 7.5 | 5.0 | 1.3 | 1.3 | 1.3 | 1.3 | 1.3 | 1.3 | 1.3 | 1.3 | 1.3 |
| | | | (3-Ethyloxetan-3-yl) methyl acrylate[d] | 7.5 | 5.0 | 1.3 | 1.3 | 1.3 | 1.3 | 1.3 | 1.3 | 1.3 | 1.3 | 1.3 |
| | | | N-acryloyl morpholine[e] | 1.5 | 1.0 | 4.9 | 4.9 | 4.9 | 4.9 | 4.9 | 4.9 | 4.9 | 4.9 | 4.9 |
| | | | Partially acrylic-modified bisphenol A-type epoxy resin[f] | - | - | 24.3 | 24.3 | 24.3 | 24.3 | 24.3 | 24.3 | 24.3 | 24.3 | 24.3 |
| | | Vinyl group-containing cyclic amide compound | N-vinyl-ε-caprolactam[g] | 24.8 | 16.5 | 11.7 | 11.7 | 11.7 | 11.7 | 11.7 | 11.7 | 11.7 | 7.0 | 16.3 |
| | | Heat curable compound | Propylene oxide-added bisphenol A-type epoxy resin[h] | - | - | 0.3 | 0.3 | 0.3 | 0.3 | 0.3 | 0.3 | 0.3 | 0.3 | 0.3 |
| | | | Bisphenol F-type epoxy resin[i] | - | - | 19.4 | 19.4 | 19.4 | 19.4 | 19.4 | 19.4 | 19.0 | 19.0 | 19.0 |
| | Photoradical polymerization initiator | Bis(2,4,6-trimethylbenzoyl)phenylphosphine oxide[j] | | 0.5 | 0.5 | 0.2 | 0.2 | 0.2 | 0.2 | 0.2 | 0.2 | 0.2 | 0.2 | 0.2 |
| | Radical scavenger | heat curing agent | 2-Methylimidazole[k] | - | - | 8.0 | 2.0 | 4.0 | 4.0 | - | 8.0 | 4.0 | 4.0 | 4.0 |
| | | | Polyamine-based curing agent[l] | - | - | - | - | - | 4.0 | 15.0 | - | - | - | - |
| | | Polyvinyl butyral[m] | | - | - | 5.0 | - | - | - | - | - | - | - | - |
| | | Polycarbonate-based urethane prepolymer | | - | 45.0 | - | - | - | - | - | - | - | - | - |
| | | Hydroquinone[n] | | 0.5 | - | - | - | - | - | - | - | - | - | - |
| | Filler | Molten silica[o] | | 24.8 | - | 14.9 | 24.2 | 22.9 | 19.9 | 12.9 | 19.9 | 24.3 | 29.0 | 19.7 |
| | Viscosity modifier | Fumed silica[p] | | - | 5.0 | 5.0 | 6.7 | 6.0 | 5.0 | 5.0 | 5.0 | 5.0 | 5.0 | 5.0 |
| Amount of vinyl group-containing cyclic amide compound relative to 100 parts by weight of (meth)acrylic compound (parts by weight) | | | | 50 | 50 | 40 | 40 | 40 | 40 | 40 | 40 | 40 | 24 | 55 |
| | Storage stability | | | ◎ | ◎ | ○ | ○ | ○ | △ | △ | ○ | ○ | ○ | ○ |
| | Depth curability | | | ○ | ○ | ◎ | ◎ | ◎ | ○ | ◎ | ○ | ◎ | ◎ | ◎ |
| | Low shrinkability on curing | | | △ | ○ | ◎ | ○ | ◎ | ◎ | ◎ | ○ | ◎ | ◎ | ◎ |

[a]("H-ABEI" available from Osaka Organic Chemical Industry Ltd.)

[b]("Viscoat #192" available from Osaka Organic Chemical Industry Ltd.)

[c]("IDAA" available from Osaka Organic Chemical Industry Ltd.)

[d]("OXE-10" available from Osaka Organic Chemical Industry Ltd.)

[e]("ACMO" available from KJ Chemicals Corporation)

[f]("UVACURE 1561" available from Daicel-Allnex Ltd.) (Acrylic compound content: about 75 wt%)

[g]("NVC" available from Tokyo Chemical Industry Co., Ltd.)

[h]("EP-4003S" available from ADEKA)

[i]("EXA-830CRP" available from DIC)

[j]("Omnirad 819" available from iGM resins)

[k]("CUREZOL 2MZ-H" available from Shikoku Chemicals Corporation)

[l](ADEKA Hardener EH-5057PK" available from ADEKA)

[m]("S-LEC KS-1" available from Sekisui Chemical Co., Ltd.)

[n](available from Tokyo Chemical Industry Co., Ltd.)

[o]("SANSIL SSP-07M" available from Tokuyama Corporation)

[p]("AEROSIL RY200" available from Nippon Aerosil Co., Ltd.)

[Table 2]

| | | | | Example | | | |
|---|---|---|---|---|---|---|---|
| | | | | 12 | 13 | 14 | 15 |
| Composition (parts by weight) | Polymerizable compound | (Meth)acrylic compound | 2-(((Butylamino)carbonyl)oxy) ethyl (meth)acrylate[a] | - | - | 8.5 | 2 |
| | | | 2-Phenoxyethyl acrylate[b] | - | - | 1.0 | 0.3 |
| | | | Isodecyl acrylate[c] | - | - | 2.0 | 0.8 |
| | | | (3-Ethyloxetan-3-yl) methyl acrylate[d] | - | - | 2.0 | 0.5 |
| | | | N-acryloyl morpholine[e] | - | - | 5.0 | 1 |
| | | | Partially acrylic-modified bisphenol A-type epoxy resin[f] | 13.5 | 10.0 | 8.0 | - |
| | | Vinyl group-containing cyclic amide compound | N-vinyl-ε-caprolactam[g] | 9.7 | 7.0 | 5.0 | - |
| | | Heat curable compound | Propylene oxide-added bisphenol A-type epoxy resin[h] | 24.1 | 24.1 | - | 18.5 |
| | | | Bisphenol F-type epoxy resin[i] | 17.6 | 29.1 | 15.8 | 19.4 |
| | Photoradical polymerization initiator | Bis(2,4,6-trimethylbenzoyl)phenylphosphine oxide[j] | | - | - | 0.3 | 0.3 |
| | Radical scavenger | heat curing agent | 2-Methylimidazole[k] | - | - | 19.4 | 19.4 |
| | | | Polyamine-based curing agent[l] | 0.2 | 0.2 | 0.2 | 0.6 |
| | | Polyvinyl butyral[m] | | 0.5 | 0.5 | - | 0.6 |
| | | Polycarbonate-based urethane prepolymer | | 0.2 | 0.2 | - | - |
| | | Hydroquinone[n] | | 5.0 | 6.0 | 2.0 | 8 |
| | Filler | Molten silica[o] | | 24.2 | 17.9 | 24.2 | 23.6 |
| | Viscosity modifier | Fumed silica[p] | | 5.0 | 5.0 | 6.7 | 5 |
| Amount of vinyl group-containing cyclic amide compound relative to 100 parts by weight of (meth)acrylic compound (parts by weight) | | | | 43 | 83 | 50 | 140 |
| Evaluation | Storage stability | | | ○ | ○ | ○ | ○ |
| | Depth curability | | | ○○ | ○ | ○○ | △ |
| | Low shrinkability on curing | | | ○○ | ○○ | △ | ○ |

[a] ("H-ABEI" available from Osaka Organic Chemical Industry Ltd.)

[b] ("Viscoat #192" available from Osaka Organic Chemical Industry Ltd.)

[c] ("IDAA" available from Osaka Organic Chemical Industry Ltd.)

[d] ("OXE-10" available from Osaka Organic Chemical Industry Ltd.)

[e] ("ACMO" available from KJ Chemicals Corporation)

[f] ("UVACURE 1561" available from Daicel-Allnex Ltd.) (Acrylic compound content: about 75 wt%)

[g] ("NVC" available from Tokyo Chemical Industry Co., Ltd.)

[h] ("EP-4003S" available from ADEKA)

[i] ("EXA-830CRP" available from DIC)

[j] ("Omnirad 819" available from iGM resins)

[k] ("CUREZOL 2MZ-H" available from Shikoku Chemicals Corporation)

[l] (ADEKA Hardener EH-5057PK" available from ADEKA)

[m] ("S-LEC KS-1" available from Sekisui Chemical Co., Ltd.)

[n] (available from Tokyo Chemical Industry Co., Ltd.)

[o] ("SANSIL SSP-07M" available from Tokuyama Corporation)

[p] ("AEROSIL RY200" available from Nippon Aerosil Co., Ltd.)

[Table 3]

| | | | | Comparative Example | | | | |
|---|---|---|---|---|---|---|---|---|
| | | | | 1 | 2 | 3 | 4 | 5 |
| Composition (parts by weight) | Polymerizable compound | (Meth)acrylic compound | 2-(((Butylamino)carbonyl)oxy) ethyl (meth)acrylate[a] | 14.8 | 10.0 | 3.0 | 14.8 | - |
| | | | 2-Phenoxyethyl acrylate[b] | 0.6 | 0.6 | 0.6 | 0.6 | - |
| | | | Isodecyl acrylate[c] | 1.3 | 1.3 | 1.0 | 1.3 | - |
| | | | (3-Ethyloxetan-3-yl) methyl acrylate[d] | 1.3 | 1.3 | 1.0 | 1.3 | - |
| | | | N-acryloyl morpholine[e] | 4.9 | 4.9 | 2.8 | 4.9 | - |
| | | | Isobornyl acrylate[q] | - | - | - | - | 13.5 |
| | | | Tricyclodecane dimethanol diacrylate[r] | - | - | - | - | 9.7 |
| | | | Partially acrylic-modified bisphenol A-type epoxy resin[f] | 24.3 | 24.3 | 18.5 | 24.3 | 24.1 |
| | | Vinyl group-containing cyclic amide compound | N-vinyl-ε-caprolactam[g] | — | 3.0 | 35.3 | - | - |
| | | Heat curable compound | Propylene oxide-added bisphenol A-type epoxy resin[h] | 0.3 | 0.3 | 0.3 | 0.3 | - |
| | | | Bisphenol F-type epoxy resin[i] | 19.4 | 19.4 | 15.0 | 19.4 | - |
| | Photoradical polymerization initiator | Bis(2,4,6-trimethylbenzoyl)phenylphosphine oxide[j] | | 0.2 | 0.2 | 0.2 | 0.2 | 0.2 |
| | | 1-Hydroxycyclohexyl phenyl ketone[s] | | - | - | - | - | 0.5 |
| | | 2-(Dimethylamino)-2-((4-methylphenyl)methyl)-1-(4-(4-morpholinyl)phenyl)-1-butanone[t] | | - | - | - | - | 0.2 |
| | Radical scavenger | Heat curing agent | 2-Methylimidazole[k] | 2.0 | 4.0 | 8.0 | - | - |
| | | | Polyamine-based curing agent[l] | — | — | — | 15.0 | 19.0 |
| | Filler | Molten silica[o] | | 24.2 | 24.7 | 9.3 | 11.2 | 27.8 |
| | Viscosity modifier | Fumed silica[p] | | 6.7 | 6.0 | 5.0 | 6.7 | 5.0 |
| Amount of vinyl group-containing cyclic amide compound relative to 100 parts by weight of (meth)acrylic compound (parts by weight) | | | | - | 8 | 158 | - | - |
| Evaluation | Storage stability | | | ○ | ○ | ○ | × | × |
| | Depth curability | | | × | × | × | × | × |
| | Low shrinkability on curing | | | × | △ | ○ | △ | × |

a ("H-ABEI" available from Osaka Organic Chemical Industry Ltd.)
b ("Viscoat #192" available from Osaka Organic Chemical Industry Ltd.)
c ("IDAA" available from Osaka Organic Chemical Industry Ltd.)
d ("OXE-10" available from Osaka Organic Chemical Industry Ltd.)
e ("ACMO" available from KJ Chemicals Corporation)
f ("UVACURE 1561" available from Daicel-Allnex Ltd.) (Acrylic compound content: about 75 wt%)
g ("NVC" available from Tokyo Chemical Industry Co., Ltd.)
h ("EP-4003S" available from ADEKA)
i ("EXA-830CRP" available from DIC)
j ("Omnirad 819" available from iGM resins)
k ("CUREZOL 2MZ-H" available from Shikoku Chemicals Corporation)
l (ADEKA Hardener EH-5057PK" available from ADEKA)
o ("SANSIL SSP-07M" available from Tokuyama Corporation)
p ("AEROSIL RY200" available from Nippon Aerosil Co., Ltd.)
q ("IBOA-B" available from Daicel-Allnex Ltd.)
r ("IRR214-K" available from Daicel-Allnex Ltd.)
s ("Ominirad 184" available from iGM resins)
t ("Omnirad 379" available from iGM resins)

(Examples 16 to 29, Comparative Examples 6 to 8)

Materials were mixed according to the compounding ratios in Tables 4 and 5 using a mixer to prepare adhesive

compositions of Examples 16 to 29 and Comparative Examples 6 to 8. The mixer used was ARE-310 (available from Thinky Corporation).

In Tables 4 and 5, "UVACURE 1561" is a mixture containing about 50% by weight of a partially acrylicmodified bisphenol A-type epoxy resin, about 25% by weight of bisphenol A-type epoxy acrylate, and about 25% by weight of a bisphenol A-type epoxy resin (about 75% by weight of radical polymerizable group-containing compound content).

The viscosity of each obtained adhesive composition was measured using an E-type viscometer ("DV-III" available from BROOK FIELD) under the conditions of 25°C and 0.5 rpm and under the conditions of 25°C and 5.0 rpm. The thixotropic index was calculated by dividing the viscosity measured under the conditions of 25°C and 0.5 rpm by the viscosity measured under the conditions of 25°C and 5.0 rpm. Tables 4 and 5 show the results.

<Evaluation>

The following evaluations were performed on the adhesive compositions obtained in Examples 16 to 29 and Comparative Examples 6 to 8. Tables 4 and 5 show the results.

(Storage stability)

Measurement of the initial viscosity right after the production and the viscosity after storage at 25°C for 24 hours was performed on the adhesive compositions of Examples 16 to 29 and Comparative Examples 6 to 8. The viscosity change rate was derived from (viscosity after storage at 25°C for 24 hours)/(initial viscosity).

The storage stability was evaluated based on the following criteria: the viscosity change rate of 2 or lower was rated as "o (Good)"; and the viscosity change rate of higher than 2 was rated as "× (Poor)".

The viscosity of the adhesive composition was measured using an E-type viscometer ("DV-III" available from BROOK FIELD) at 25°C and a rotation speed of 1.0 rpm.

(Low shrinkability on curing)

The adhesive compositions obtained in Examples 16 to 29 and Comparative Examples 6 to 8 were each irradiated with UV light (wavelength of 365 nm) to a dose of 1,000 mJ/cm$^2$, followed by heating at 80°C for one hour. Thus, a cured product having a size of 15 mm in length, 15 mm in width, and 2 mm in thickness was obtained. Measurement of specific gravity was performed on the adhesive compositions before curing at 25°C and the cured products of the adhesive compositions at 25°C. The curing shrinkage was calculated using the equation described above.

The low shrinkability on curing was evaluated based on the following criteria: the case where the curing shrinkage was not higher than 3% was rated as "o (Good)"; the case where the curing shrinkage was higher than 3% and not higher than 3.5% was rated as "△ (Fair)"; and the case where the curing shrinkage was higher than 3.5% was rated as "× (Poor)".

(Adhesion on photocuring)

To a liquid crystal polymer ("SUMIKA SUPER LCP E4008" available from Nippon Testpanel Co., Ltd.) having a size of 100 mm in length, 25 mm in width, and 2.0 mm in thickness as a substrate was applied each of the adhesive compositions obtained in Examples 16 to 29 and Comparative Examples 6 to 8, and a silicon wafer substrate (2 mm in length, 2 mm in width, 0.7 mm in thickness) was laminated thereon. Subsequently, the resulting laminate was irradiated with UV light (wavelength of 365 nm) to a dose of 1,000 mJ/cm$^2$, thereby photocuring the adhesive composition. Thus, a test piece was obtained. The obtained test piece was subjected to measurement of the die shear strength using a die shear tester at a speed of 300 μm/s at 25°C. The die shear tester used was a bond tester DAGE 4000 (available from Nordson DAGE).

The adhesion was evaluated based on the following criteria: the case where the die shear strength was 1 N or higher was rated as "o (Good)"; and the case where the die shear strength was lower than 1N was rated as "× (Poor)".

(Heat curing property at low temperature)

To a liquid crystal polymer ("SUMIKA SUPER LCP E4008" available from Nippon Testpanel Co., Ltd.) having a size of 100 mm in length, 25 mm in width, and 2.0 mm in thickness as a substrate was applied each of the adhesive compositions obtained in Examples 16 to 29 and Comparative Examples 6 to 8, and a silicon wafer substrate (2 mm in length, 2 mm in width, 0.7 mm in thickness) was laminated thereon. Subsequently, the resulting laminate was irradiated with UV light (wavelength of 365 nm) to a dose of 1,000 mJ/cm$^2$ and then heated at 80°C for one hour, thereby curing the adhesive composition. Thus, a test piece was obtained. The obtained test piece was subjected to measurement of

the die shear strength using a die shear tester at a speed of 300 μm/s at 25°C. The die shear tester used was a bond tester DAGE 4000 (available from Nordson DAGE).

The curability by heating at low temperature was evaluated based on the following criteria: the case where the die shear strength was 100 N or higher was rated as "o (Good)"; and the case where the die shear strength was lower than 100 N was rated as "× (Poor)".

[Table 4]

| | | | | Example | | | | | | | |
|---|---|---|---|---|---|---|---|---|---|---|---|
| | | | | 16 | 17 | 18 | 19 | 20 | 21 | 22 | 23 |
| Composition (parts by weight) | Polymerizable compound | Radical polymerizable compound containing no epoxy group | N-vinyl-2-pyrrolidone[u] | 30 | 30 | 20 | 30 | 30 | - | 30 | 30 |
| | | | N-vinyl-ε-caprolactam[g] | - | - | - | - | - | 30 | - | - |
| | | | Isobornyl acrylate[q] | 10 | 25 | 10 | 25 | - | 10 | 10 | 10 |
| | | | N-acryloyl morpholine[e] | - | - | - | - | 10 | - | - | - |
| | | Epoxy compound containing no radical polymerizable group | Bisphenol F-type epoxy resin[i] | 20 | 35 | 40 | 10 | 20 | 20 | 20 | 20 |
| | | Compound containing epoxy group and radical polymerizable group | Partially acrylic-modified bisphenol A-type epoxy resin[f] | 40 | 10 | 30 | 35 | 40 | 40 | 40 | 40 |
| | Photoradical polymerization initiator | Oxime ester compound[v] | | 2 | 2 | 2 | 2 | 2 | 2 | 2 | 2 |
| | Heat radical polymerization initiator | Azo initiator[w] | | - | - | - | - | - | - | - | - |
| | Heat curing agent | 2-Methylimidazole[k] | | 3 | 3 | 3 | 3 | 3 | 3 | 3 | 3 |
| | | Modified polyamine-based curing agent[x] | | - | - | - | - | - | - | - | - |
| | | 2-Phenylimidazole[y] | | - | - | - | - | - | - | - | - |
| | Filler | Methyl-treated silica[z] | | 20 | 20 | 20 | 20 | 20 | 20 | 5 | 50 |
| | Viscosity modifier | Hydrophobic fumed silica[aa] | | 5 | 5 | 5 | 5 | 5 | 5 | 5 | 5 |
| | Light-blocking agent | Titanium black[bb] | | - | - | - | - | - | - | - | - |
| Total amount of compounds containing radical polymerizable group in 100 parts by weight of polymerizable compound (parts by weight) | | | | 70 | 62.5 | 52.5 | 81.3 | 70 | 70 | 70 | 70 |
| Thixotropic index | | | | 5.5 | 5.4 | 5.2 | 5.3 | 5.5 | 5.6 | 4.1 | 6.5 |
| Evaluation | Storage stability | | | ○ | ○ | ○ | ○ | ○ | ○ | ○ | ○ |
| | Low shrinkability on curing | | | ○ | ○ | ○ | ○ | ○ | ○ | ○ | ○ |
| | Adhesion on photocuring | | | ○ | ○ | ○ | ○ | ○ | ○ | ○ | ○ |
| | Heat curing property at low temperature | | | ○ | ○ | ○ | ○ | ○ | ○ | ○ | ○ |

[e]("ACMO" available from KJ Chemicals Corporation)

[f]("UVACURE 1561" available from Daicel-Allnex Ltd.) (Acrylic compound content: about 75 wt%)

[g]("NVC" available from Tokyo Chemical Industry Co., Ltd.)

[i]("EXA-830CRP" available from DIC)

[k]("CUREZOL 2MZ-H" available from Shikoku Chemicals Corporation)

[q]("IBOA-B" available from Daicel-Allnex Ltd.)

[u](available from Fujifilm Wako Pure Chemical Corporation)

[v]("ADEKA Arkls NCI-930" available from ADEKA)

[w]("V-501" available from Fujifilm Wako Pure Chemical Corporation)

[x]("ADEKA Hardener EH-5057PK" available from ADEKA, starting range temperature: 80°C or lower)

[y]("CUREZOL 2PZ" available from Shikoku Chemicals Corporation, starting range temperature: 96°C - 107°C)

[z]("SANSIL SSP-07M" available from Tokuyama Corporation)

[aa]("AEROSIL R202" available from Nippon Aerosil Co., Ltd.)

[bb]("13M-C" available from Mitsubishi Materials Corporation)

[Table 5]

| | | | | Example | | | | | | Comparative Example | | |
|---|---|---|---|---|---|---|---|---|---|---|---|---|
| | | | | 24 | 25 | 26 | 27 | 28 | 29 | 6 | 7 | 8 |
| Composition (parts by weight) | Polymerizable compound | Radical polymerizable compound containing no epoxy group | N-vinyl-2-pyrrolidone[u] | 30 | 30 | – | 30 | 30 | 30 | 30 | 30 | 30 |
| | | | N-vinyl-ε-caprolactam[g] | – | – | – | – | – | – | – | – | – |
| | | | Isobornyl acrylate[q] | 10 | 10 | 40 | 10 | 10 | 10 | 10 | 70 | 10 |
| | | | N-acryloyl morpholine[e] | – | – | – | – | – | – | – | – | – |
| | | Epoxy compound containing no radical polymerizable group | Bisphenol F-type epoxy resin[i] | 20 | 20 | 20 | 20 | 20 | 20 | 60 | – | 20 |
| | | Compound containing epoxy group and radical polymerizable group | Partially acrylic-modified bisphenol A-type epoxy resin[f] | 40 | 40 | 40 | 40 | 40 | 40 | – | – | 40 |
| | Photoradical polymerization initiator | Oxime ester compound[v] | | 2 | 2 | 2 | 2 | 2 | 2 | 2 | 2 | 2 |
| | Heat radical polymerization initiator | Azo initiator[w] | | 0.5 | 0.5 | – | – | – | – | – | – | – |
| | Heat curing agent | 2-Methylimidazole[k] | | 3 | 3 | 3 | 3 | 3 | – | 3 | 3 | – |
| | | Modified polyamine-based curing agent[x] | | – | – | – | – | – | 30 | – | – | – |
| | | 2-Phenylimidazole[y] | | – | – | – | – | – | – | – | – | 3 |
| | Filler | Methyl-treated silica[z] | | 20 | 20 | 20 | – | 60 | 20 | 20 | 20 | 20 |
| | Viscosity modifier | Hydrophobic fumed silica[aa] | | 5 | 5 | 5 | 5 | 5 | 5 | 5 | 5 | 5 |
| | Light-blocking agent | Titanium black[bb] | | – | 1 | – | – | – | – | – | – | – |
| Total amount of compounds containing radical polymerizable group in 100 parts by weight of polymerizable compound (parts by weight) | | | | 70 | 70 | 70 | 70 | 70 | 70 | 40 | 100 | 70 |
| Thixotropic index | | | | 5.5 | 5.6 | 5.5 | 3.5 | 7.1 | 6.2 | 4.2 | 4.4 | 5.5 |
| Evaluation | Storage stability | | | ○ | ○ | ○ | ○ | ○ | ○ | ○ | ○ | ○ |
| | Low shrinkability on curing | | | ○ | ○ | △ | ○ | ○ | ○ | ○ | × | ○ |
| | Adhesion on photocuring | | | ○ | ○ | ○ | ○ | ○ | ○ | × | ○ | ○ |
| | Heat curing property at low temperature | | | ○ | ○ | ○ | ○ | ○ | ○ | ○ | × | × |

[e]("ACMO" available from KJ Chemicals Corporation)

[f]("UVACURE 1561" available from Daicel-Allnex Ltd.) (Acrylic compound content: about 75 wt%)

[g]("NVC" available from Tokyo Chemical Industry Co., Ltd.)

[i]("EXA-830CRP" available from DIC)

[k]("CUREZOL 2MZ-H" available from Shikoku Chemicals Corporation)

[q]("IBOA-B" available from Daicel-Allnex Ltd.)

[u](available from Fujifilm Wako Pure Chemical Corporation)

[v]("ADEKA Arkls NCI-930" available from ADEKA)

[w]("V-501" available from Fujifilm Wako Pure Chemical Corporation)

[x]("ADEKA Hardener EH-5057PK" available from ADEKA, starting range temperature: 80°C or lower)

[y]("CUREZOL 2PZ" available from Shikoku Chemicals Corporation, starting range temperature: 96°C - 107°C)

[z]("SANSIL SSP-07M" available from Tokuyama Corporation)

[aa]("AEROSIL R202" available from Nippon Aerosil Co., Ltd.)

[bb]("13M-C" available from Mitsubishi Materials Corporation)

INDUSTRIAL APPLICABILITY

The present invention can provide an adhesive composition capable of suppressing shrinkage on curing and

excellent in storage stability and depth curability, or an adhesive composition excellent in adhesion on photocuring, curability by heating at low temperature, and low shrinkability on curing. The present invention can also provide an optical component, an electronic component, and an electronic module each including the adhesive composition.

## Claims

1. An adhesive composition comprising:

   a polymerizable compound;
   a photopolymerization initiator; and
   a radical scavenger,
   the polymerizable compound comprising a (meth)acrylic compound and a vinyl group-containing cyclic amide compound,
   the vinyl group-containing cyclic amide compound being contained in an amount of 20 parts by weight or more and 150 parts by weight or less relative to 100 parts by weight of the (meth)acrylic compound.

2. The adhesive composition according to claim 1,
   wherein the polymerizable compound further contains a heat-curable compound.

3. The adhesive composition according to claim 1 or 2,
   wherein the polymerizable compound comprises a compound containing a photopolymerizable functional group and a thermopolymerizable functional group.

4. An adhesive composition comprising:

   a polymerizable compound;
   a photopolymerization initiator; and
   a heat curing agent,
   the polymerizable compound comprising a radical polymerizable compound containing no epoxy group, an epoxy compound containing no radical polymerizable group, and a compound containing an epoxy group and a radical polymerizable group,
   the heat curing agent comprising a heat curing agent having a lowest value of a starting range temperature of 80°C or lower.

5. The adhesive composition according to claim 4,
   wherein the radical polymerizable compound containing no epoxy group comprises a compound containing one vinyl group in one molecule.

6. The adhesive composition according to claim 5,
   wherein the compound containing one vinyl group in one molecule comprises a vinyl group-containing cyclic amide compound.

7. The adhesive composition according to claim 6,
   wherein the vinyl group-containing cyclic amide compound is at least one of N-vinyl-2-pyrrolidone or N-vinyl-ε-caprolactam.

8. The adhesive composition according to claim 4, 5, 6, or 7,
   wherein compounds containing a radical polymerizable group are contained in a total amount of 45 parts by weight or more and 90 parts by weight or less in 100 parts by weight of the polymerizable compound.

9. The adhesive composition according to claim 4, 5, 6, 7, or 8,
   wherein the heat curing agent having a lowest value of a starting range temperature of 80°C or lower comprises an imidazole-based curing agent.

10. The adhesive composition according to claim 1, 2, 3, 4, 5, 6, 7, 8, or 9, comprising a filler.

11. The adhesive composition according to claim 10,

wherein the filler comprises silica having a methyl-treated surface.

**12.** The adhesive composition according to claim 10 or 11,
wherein the filler is contained in an amount of 5 parts by weight or more and 50 parts by weight or less relative to 100 parts by weight of the polymerizable compound.

**13.** The adhesive composition according to claim 1, 2, 3, 4, 5, 6, 7, 8, 9, 10, 11, or 12, comprising a light-blocking agent.

**14.** The adhesive composition according to claim 1, 2, 3, 4, 5, 6, 7, 8, 9, 10, 11, 12, or 13, having a thixotropic index of 3.0 or higher and 7.0 or lower.

**15.** The adhesive composition according to claim 1, 2, 3, 4, 5, 6, 7, 8, 9, 10, 11, 12, 13, or 14, which is for use in fixing a movable component.

**16.** An optical component comprising a cured product of the adhesive composition according to claim 1, 2, 3, 4, 5, 6, 7, 8, 9, 10, 11, 12, 13, or 14.

**17.** An electronic component comprising a cured product of the adhesive composition according to claim 1, 2, 3, 4, 5, 6, 7, 8, 9, 10, 11, 12, 13, or 14.

**18.** An electronic module comprising the optical component according to claim 16 or the electronic component according to claim 17.

**INTERNATIONAL SEARCH REPORT**

International application No. PCT/JP2020/021051

A. CLASSIFICATION OF SUBJECT MATTER
C09J 4/00(2006.01)i; C09J 4/02(2006.01)i; C09J 11/06(2006.01)i; C09J 163/00(2006.01)i
FI: C09J4/02; C09J11/06; C09J4/00; C09J163/00
According to International Patent Classification (IPC) or to both national classification and IPC

B. FIELDS SEARCHED

Minimum documentation searched (classification system followed by classification symbols)
C09J1/00-201/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 7-2978 A (SEKISUI CHEMICAL CO., LTD.) 06.01.1995 (1995-01-06) claims 1-2, paragraphs [0015], [0023]-[0024], [0028]-[0030], [0036]-[0038], [0052], example 1 | 1-14 |
| X<br>Y | WO 2008/035791 A1 (HENKEL CORP.) 27.03.2008 (2008-03-27) claims 8-13, paragraphs [0034]-[0035], [0058]-[0061], [0072], [0074]-[0076], example 1 | 4, 8, 10-13, 15-18<br>4, 8, 10-13, 15-18 |
| Y | JP 2004-107602 A (OLYMPUS CORP.) 08.04.2004 (2004-04-08) claim 1, paragraph [0018] | 1-3 |
| Y | WO 2018/047598 A1 (THREEBOND CO., LTD.) 15.03.2018 (2018-03-15) claim 1, paragraphs [0028]-[0030] | 1-3 |
| Y | JP 2015-507680 A (3M INNOVATIVE PROPERTIES COMPANY) 12.03.2015 (2015-03-12) claim 1, paragraphs [0024]-[0025], [0039], table 1 | 4-18 |
| Y | JP 2005-344112 A (HEXCEL COMPOSITES LTD.) 15.12.2005 (2005-12-15) claim 1, paragraphs [0033], [0041], example 1 | 4-18 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>19 August 2020 (19.08.2020) | Date of mailing of the international search report<br>01 September 2020 (01.09.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2020/021051

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-188511 A (SHIKOKU CHEMICALS CORPORATION) 29.11.2018 (2018-11-29) paragraphs [0021], [0027]-[0028], [0101], example 1 | 1-3 |

Form PCT/ISA/210 (continuation of second sheet) (January 2015)

**INTERNATIONAL SEARCH REPORT**

International application No.
PCT/JP2020/021051

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2020/021051

| Patent Documents referred in the Report | Publication Date | Patent Family | Publication Date |
|---|---|---|---|
| JP 7-2978 A | 06 Jan. 1995 | (Family: none) | |
| WO 2008/035791 A1 | 27 Mar. 2008 | CN 101553545 A<br>KR 10-2009-0121271 A<br>TW 200827423 A | |
| JP 2004-107602 A | 08 Apr. 2004 | (Family: none) | |
| WO 2018/047598 A1 | 15 Mar. 2018 | CN 109689815 A<br>KR 10-2019-0046800 A | |
| JP 2015-507680 A | 12 Mar. 2015 | US 2014/0349054 A1<br>claim 1, paragraphs [0036]-[0037], [0055]<br>WO 2013/101693 A1<br>EP 2797973 A1<br>CN 102690611 A<br>KR 10-2014-0116444 A | |
| JP 2005-344112 A | 15 Dec. 2005 | US 2005/0272883 A1<br>claim 1, paragraphs [0034], [0039]-[0042], example 1<br>GB 412196 D<br>EP 1602678 A1<br>AT 398148 T<br>DK 1602678 T<br>ES 2307120 T | |
| JP 2018-188511 A | 29 Nov. 2018 | (Family: none) | |

Form PCT/ISA/210 (patent family annex) (January 2015)

**INTERNATIONAL SEARCH REPORT**

International application No.
PCT/JP2020/021051

<Continuation of Box No. III>

(Invention 1) Claims 1-3 and parts of claims 10-17 dependent on claims 1-3

Claims 1-3 and parts of claims 10-17 dependent on claims 1-3 have the special technical feature of "containing a polymerizable compound, a photopolymerization initiator, a radical scavenger, wherein the polymerizable compound contains a (meth)acrylic compound and a cyclic amide compound having a vinyl group, and the content of the cyclic amide compound having a vinyl group is 20-150 parts by weight with respect to 100 parts by weight of the (meth)acrylic compound", and are thus classified as invention 1.

(Invention 2) Claims 4-9 and parts of claims 10-17 dependent on claims 4-9

Claims 4-9 share, with claim 1 classified as invention 1, the common technical feature of "containing a polymerizable compound and a photopolymerization initiator". However, said technical feature does not make a contribution over the prior art in light of the disclosure of document 1 and thus cannot be said to be a special technical feature. Moreover, there do not exist other identical or corresponding special technical features between these inventions.

Furthermore, claims 4-9 are not dependent on claim 1. Moreover, claims 4-9 are not substantially identical or equivalent to any of the claims classified as invention 1.

Therefore, claims 4-9 cannot be classified as invention 1.

In addition, claims 4-9 and parts of claims 4-9 dependent on claims 1-3 have the special technical feature of "containing a polymerizable compound, a photopolymerization initiator, a thermal curing agent, wherein the polymerizable compound contains a radically polymerizable compound having no epoxy group, an epoxy compound having no radically polymerizable group, and a compound having an epoxy group and a radically polymerizable group, and the thermal curing agent includes a thermal curing agent having the lowest temperature in an initiation region of at most 80°C", and are thus classified as invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011057755 A
- JP 2014031461 A